(19) Europäisches Patentamt
European Patent Office
Office européen des brevets

(11) **EP 1 912 447 A1**

(12) **EUROPEAN PATENT APPLICATION**
published in accordance with Art. 153(4) EPC

(43) Date of publication:
**16.04.2008 Bulletin 2008/16**

(51) Int Cl.:
*H04N 13/02* *(2006.01)*

(21) Application number: **06781580.3**

(22) Date of filing: **25.07.2006**

(86) International application number:
**PCT/JP2006/314668**

(87) International publication number:
**WO 2007/013449 (01.02.2007 Gazette 2007/05)**

(84) Designated Contracting States:
**DE FR GB**

(30) Priority: **26.07.2005 JP 2005215402**

(71) Applicants:
• **Sharp Kabushiki Kaisha**
**Osaka-shi, Osaka 545-8522 (JP)**
• **Olympus Imaging Corporation**
**Shibuya-ku**
**Tokyo 151-0072 (JP)**
• **SANYO ELECTRIC CO., LTD.**
**Moriguchi City, Osaka 570-8677 (JP)**
• **Sony Corporation**
**Tokyo 108-0075 (JP)**

(72) Inventors:
• **WAKABAYASHI, Yasutaka**
**Chiba-shi, Chiba 266-0005 (JP)**

• **UCHIUMI, Tadashi**
**Osaka-shi, Osaka 547-0045 (JP)**
• **YOSHIDA, Hideaki,**
**c/o Olympus Imaging Corp.**
**Tokyo 151-0072 (JP)**
• **MASHITANI, Ken**
**Osaka 572-0839 (JP)**
• **SEKIZAWA, Hidehiko,**
**c/o Sony Corporation**
**Tokyo 108-0075 (JP)**

(74) Representative: **Brown, Kenneth Richard**
**R.G.C. Jenkins & Co.**
**26 Caxton Street**
**London SW1H 0RJ (GB)**

(54) **IMAGE PROCESSING DEVICE**

(57) In 3D information creation means 102, 3D information including information on an image identifier and arrangement position of the image identifier is input from control means 101. According to the 3D information, which has been input, an identification mark is created and output together with the arrangement position information to image integration means 103. The image integration means 103 integrates a right-eye image and a left-eye image, which are input, and the identification mark according to the arrangement position information to create image data and outputs the same. Thus, an identifier indicating a stereoscopic image is provided in stereoscopic image data and observation is not disturbed when stereoscopically displayed.

FIG. 1

## Description

### TECHNICAL FIELD

The present invention relates to an image processing device for adding attribute information to image data when creating the image data for three-dimensionally displaying.

### BACKGROUND ART

Conventionally, a variety of methods for displaying a three-dimensional image have been proposed. The generally used method out of the methods is the one so-called "two-eye method" in which parallax between both eyes is utilized. By preparing a left-eye image and a right-eye image having parallax between both eyes and by viewing the left-eye image and the right-eye image by a left eye and a right eye, respectively, a stereoscopic effect such as to directly views the object may be obtained.

As a method of creating the stereoscopic image in such stereoscopic viewing, two methods, which are a parallel method and a crossing method, are known. The left-eye and right-eye images for creating the stereoscopic image are taken by placing a camera at positions corresponding to left and right viewpoints, or the images are created by placing a virtual camera on software at viewpoints. At that time, by using the left-eye and the right-eye images, which are taken or taken, the left-eye image and the right-eye image are arranged on the observer's left and right, respectively, in the parallel method, and left-eye image and the right-eye image are arranged on the observer's right and left, respectively, in the crossing method, thereby creating the image.

With a photograph for naked eye stereoscopic viewing, which is created by such a method, the arrangement of the right and left images are different according to the method of creating, so that a stereo camera capable of distinguishing the left-eye image and the right-eye image in order to appropriately stereoscopically view is proposed. For example, in the "stereoscopic camera" disclosed in the patent document 1 (Japanese Patent Application Laid-Open Hei 6 No. 324413), there is a method of taking images by using one lens and two mirrors when recording the left-eye image and the right-eye image, and a method of taking images by using only right and left two lenses. In a case of taking the images by two lenses, when the image taken in a left half is printed on printing paper, an image seen from a right side is formed on a left half of the printing paper, on the other hand, when the image taken in a right half is printed on the printing paper, an image seen from a left side is formed on a right half of the printing paper. Therefore, it is required to cut the printing paper into half and reverse the left and right images, however, the left and right images are substantially the same and it is difficult to find difference therebetween, so that a mark is taken on the photographs so as to be distinguishable. Similarly, in the "stereo camera" disclosed in the patent document 2 (Japanese Patent Application Laid-Open Hei 9 No. 160143) also, the mark with which the right and left images are distinguished is taken, and it is easy to perform the naked eye stereoscopic viewing by using the taken mark.

Also, recently, a display device capable of stereoscopically viewing has been proposed, and there are some methods such as a time division method, a parallax barrier method, and a polarizing filter method, as representative methods of two-eye methods. The time division method and the parallax barrier method are described as examples.

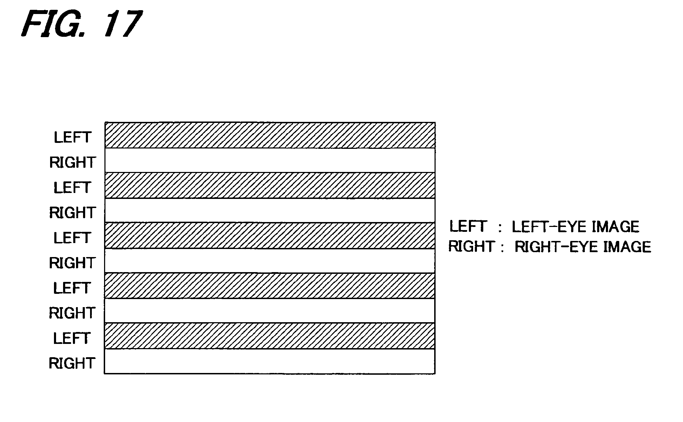

Fig. 17 is a schematic diagram for illustrating the time division method. In the time division method, the left-eye image and the right-eye image are alternately arranged every alternate pixel in the vertical direction as shown in Fig. 17 such that the display of the left-eye image and the display of the right-eye image are alternately displayed. Vertical resolution of the left-eye image and the right-eye image is half of that in general two-dimensional display. An observer wears shutter-type glasses, which opens and closes in synchronization with a switching period of the display. The shutter herein used is such that a left-eye side opens and a right-eye side closes when the left-eye image is displayed and the left-eye side closes and the right-eye side opens when the right-eye image is displayed. By configuring so, the left-eye image is observed only by the left eye and the right-eye image is observed only by the right eye, so that it becomes possible to perform the stereoscopically viewing.

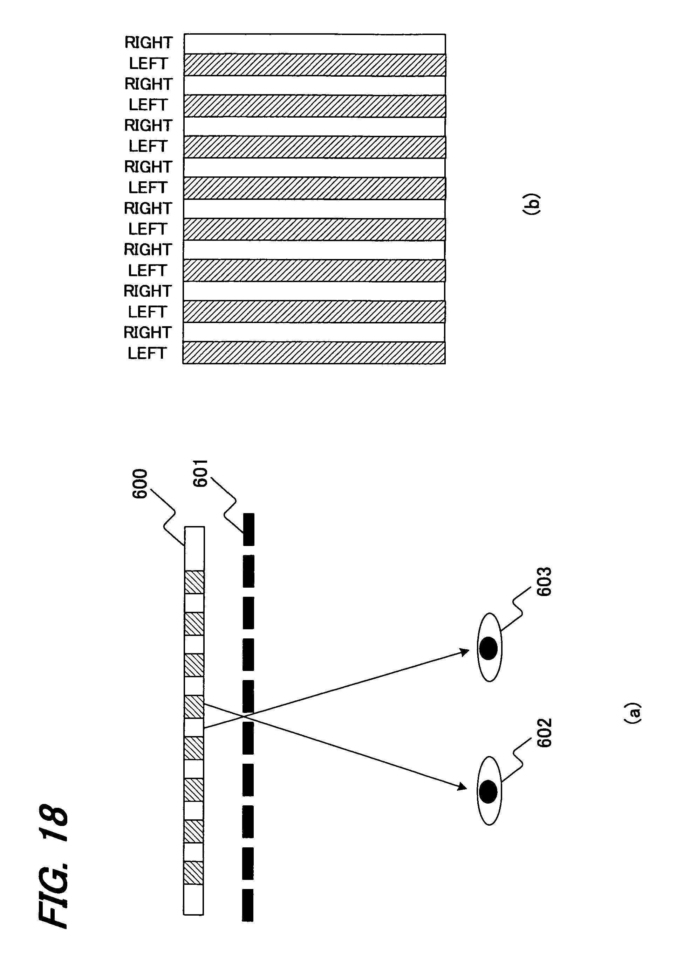

Fig. 18 is a schematic diagram for illustrating the parallax barrier method. Fig. 18(a) is a view showing principle way a parallax is occurred. On the other hand, Fig. 18(b) is a view showing a screen, which is displayed by the parallax barrier method. In Fig. 18(a), by displaying an image in which the left-eye image and the right-eye image are alternately arranged every alternate pixel in the horizontal direction as shown in Fig. 18(b) on an image display panel 600 and placing a parallax barrier 601, which has a slit with a gap narrower than a gap between pixels of the same viewpoint in front of the image display panel 600, the left-eye image is observed by only a left eye 602 and the right-eye image is observed by only a right eye 603, so that it becomes possible to perform the stereoscopic viewing.

Other than above, there is a lenticular method in which the image of a format shown in Fig. 18(b) is stereoscopically displayed by using a lenticular lens arranged in front as well as the parallax barrier method.

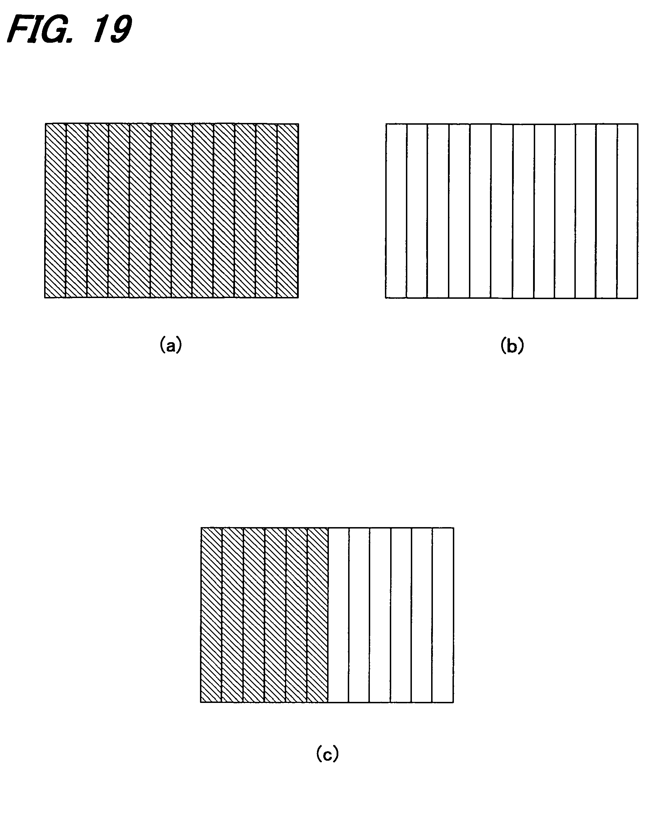

Herein, an example of a recording data format, which corresponds to the parallax barrier method or the lenticular method, is shown in Fig. 19. The left-eye image shown in Fig. 19(a) and the right-eye image shown in Fig. 19(b) are thinned every one pixel in the horizontal direction, thereby creating one stereoscopic image shown in Fig. 19(c) to record the same. When displaying the same, by rearranging this stereoscopic image every pixel, it becomes possible to stereoscopically view the same by naked eyes when viewing by the display device, which corresponds to the parallax barrier method or the lenticular method.

Patent Document 1: Japanese Patent Application Laid-Open Hei 6 No. 324413

Patent Document 2: Japanese Patent Application Laid-Open Hei 9 No. 160143

DISCLOSURE OF THE INVENTION

PROBLEM TO BE SOLVED BY THE INVENTION

However, when the stereoscopic image as shown in Fig. 19(c) is displayed on a general display device, which does not support the stereoscopic viewing, it is displayed such that the left-eye image and the right-eye image are only arranged on left and right. In such a case, the one who has the general display device only may not clearly identify that the image is the one taken for the stereoscopic viewing, thereby it is possible to cause confusion. Therefore, it is preferable that visible means, indicating that the image is for the stereoscopic viewing when the stereoscopic image is displayed on the general display device, is prepared. On the other hand, the visible means indicating that the image is for the stereoscopic viewing, that is to say, a certain mark may not disturb the stereoscopic viewing when observed by the display device capable of stereoscopically viewing, and cannot be deleted when processing the image or printing on the printing paper of which size is different from the image size. Although it is possible to distinguish the left-eye image and the right-eye image in the above-described patent documents 1 and 2, this is a case of the naked eye stereoscopic viewing with a photograph, and viewability on the display device is not considered. In addition, it is not considered that there may be a possibility that the mark is deleted during processing or printing.

The present invention is achieved for solving the above-described problems, and an object thereof is to provide the image processing device having an identifier indicating the stereoscopic image within the stereoscopic image data and do not disturb the viewing when performing the stereoscopic viewing.

MEANS FOR SOLVING THE PROBLEM

The present invention is an image processing device for creating stereoscopic image data composed of a plurality of images corresponding to each of a plurality of viewpoints, comprising:

information creation means including information indicating a stereoscopic image and information indicating a method of creating the stereoscopic image, for creating a stereoscopic image identifier visible as the image when displaying the stereoscopic image, wherein the stereoscopic image data includes the stereoscopic image identifier.

Also, the stereoscopic image identifiers are arranged on two or more portions within the stereoscopic image data.

Also, the stereoscopic image identifiers are arranged so as to be fused to each other when displaying the stereoscopic image data on a display device capable of stereoscopically viewing.

Also, arrangement position determination means for determining an arrangement position of the stereoscopic image identifier at an optional position within the stereoscopic image data is further provided.

Also, attention image area setting means for setting an attention image area within the stereoscopic image data is further provided, and the arrangement position determination means arranges the stereoscopic image identifier outside the attention image area in the stereoscopic image data.

Also, image display means for displaying the image is further provided for displaying the image in a state in which the stereoscopic image identifier is arranged on a planned position by the arrangement position determination means on the image display means, wherein the arrangement position determination means determines the arrangement position of the stereoscopic image identifier according to arrangement position determination information indicating the arrangement position of the stereoscopic image identifier.

Also, the arrangement position determination means is configured so as to be capable of varying the planned position on which the stereoscopic image identifier is to be arranged, when determining the arrangement position according to the arrangement position determination information.

Also, reproduction position estimation means for estimating a reproduction position in depth of an optional area of the stereoscopic image data is further provided, wherein

the arrangement position determination means selects an area based on an estimation result of the reproduction position estimation means to determine the arrangement position of the stereoscopic image identifier.

Also, the arrangement position determination means determines the arrangement position of the stereoscopic image identifier on an area estimated that the stereoscopic image is reproduced behind a screen by means of the reproduction position estimation means.

Also, the stereoscopic image identifier is recorded on the upper or lower end of the stereoscopic image data, and is arranged within a range not larger than $(4/3) \times V/2$ in a horizontal direction and not larger than $(2/3) \times H/2$ in a vertical direction of the stereoscopic image data, wherein a size of the stereoscopic image data in the horizontal direction is H and a size in the vertical direction is V.

EFFECT OF THE INVENTION

According to an image processing device of the present invention, stereoscopic image data composed of a plurality of images corresponding to each of a plurality of viewpoints includes information indicating the stereoscopic image and information indicating a method of creating the stereoscopic image and includes stereoscopic image identifier, which is visible as an image when displaying the stereoscopic image, thereby, it becomes possible to identify that this is the image for the stereoscopic viewing even when observed by a display device of two-dimensional display, which does not correspond to the stereoscopic viewing.

In addition, by arranging the stereoscopic image identifiers on two or more positions of the stereoscopic image data, a possibility that the identifier is cut away when trimming the image may be reduced.

Also, when displaying the stereoscopic image data by the display device capable of stereoscopically viewing, by arranging the stereoscopic image identifiers so as to be fused to each other, the stereoscopic image identifier is stereoscopically viewed when stereoscopically viewing, so that it becomes possible to prevent the identifier from disturbing the stereoscopic viewing.

Also, by further comprising arrangement position determination means for determining the arrangement position of the stereoscopic image identifier on an optional position within the stereoscopic image data, it becomes possible that the photographer or the creator or the image selects the arrangement of the identifier corresponding to the image, so that it is possible to freely select the position so as not to disturb a subject, which is wanted to be viewed stereoscopically.

Also, by further comprising attention image area setting means for setting an attention image area within the stereoscopic image data, and arranging the stereoscopic image identifier outside the attention image area in the stereoscopic image data, it becomes possible to prevent the identifier from being displayed in the attention image area set as a portion, which is wanted to be viewed stereoscopically by the creator.

Also, by further comprising image display means for displaying the image to display the image in a state in which the stereoscopic image identifier is arranged on a planned position by the arrangement position determination means on image display means, wherein the arrangement position determination means determines the arrangement position of the stereoscopic identifier according to the arrangement position determination information indicating the arrangement position of the stereoscopic image identifier, thereby determining the arrangement position by confirming a condition of the image after identifier is arranged by the display means.

Also, the arrangement position determination means enables that the creator arranges the identification mark on an optional position by configuring a planned position on which the stereoscopic image identifier is to be arranged variable when determining the arrangement position according to the arrangement position determination information, and at the same time, it is possible to change the arrangement position to an appropriate position when this is to be arranged on an inappropriate position such as within the attention image area or outside the image.

Also, by further comprising reproduction position estimation means for estimating a reproduction position in depth of the optional area of the stereoscopic image data, wherein the arrangement position determination means selects the area based on the estimation result of the reproduction position estimation means and determines the arrangement position of the stereoscopic image identifier, it becomes possible to reduce a sense of discomfort when observing due to a large difference between the stereoscopic image identifier and the reproduction position in depth of the image around the arrangement position.

Also, the arrangement position determination means is capable of preventing the stereoscopic image data in which only the identifier is seen so as to sink since the identifier is arranged in the area in which the stereoscopic image is reproduced in front of the screen of the display device from gene rating, which especially brings discomfort, by determining the arrangement position of the stereoscopic image identifier in the area estimated that the stereoscopic image is reproduced behind the screen by the reproduction position estimation means.

Also, by arranging the stereoscopic image identifier within a range not larger than $(4/3) \times V/2$ in a horizontal direction and not larger than $(2/3) \times H/2$ in a vertical direction from the central portion of the stereoscopic image data relative to a size in the horizontal direction H and a size in the vertical direction V of the stereoscopic image data, it becomes possible to reduce the possibility that the stereoscopic image identifier is cut away when printing.

BRIEF DESCRIPTION OF THE DRAWINGS

[Fig. 1] Fig. 1 is a block diagram showing a configuration of an image processing device according to an embodiment 1 of the present invention;
[Fig. 2] Fig. 2 is a view showing an example of stereoscopic image data;
[Fig. 3] Fig. 3 is a view showing an example regarding arrangement of an identification mark in the stereoscopic image data;
[Fig. 4] Fig. 4 is a view showing an example regarding arrangement of an identification mark in the stereoscopic image data;
[Fig. 5] Fig.5 is a view showing an arrangement limit of the identification mark in the stereoscopic image data;

[Fig. 6] Fig. 6 is a view showing an example when arranging the identification mark in an arrangement limit range in the stereoscopic image data;

[Fig. 7] Fig. 7 is a view illustrating a file format and 3D information;

[Fig. 8] Fig. 8 is a block diagram showing an image processing device of an embodiment 2 of the present invention;

[Fig. 9] Fig. 9 is a view showing an example regarding a representation of the identification mark in the stereoscopic image data;

[Fig. 10] Fig. 10 is a view showing an example regarding an arrangement of the identification mark in the stereoscopic image data;

[Fig. 11] Fig. 11 is an illustrative view regarding the arrangement of the identification mark when setting a 3D attention image area;

[Fig. 12] Fig. 12 is a view showing an example regarding arrangement of the identification mark in the stereoscopic image data;

[Fig. 13] Fig. 13 is a block diagram showing an image reproduction device;

[Fig. 14] Fig. 14 is a view showing a display image on a 2D display and a 3D display;

[Fig. 15] Fig. 15 is a block diagram showing a modified example of the image processing device in the embodiment 2 of the present invention;

[Fig. 16] Fig. 16 is a block diagram showing an image processing device of an embodiment 3 of the present invention;

[Fig. 17] Fig. 17 is a schematic diagram illustrating a time divisional method;

[Fig. 18] Fig. 18 is a schematic diagram illustrating a parallax barrier method; and

[Fig. 19] Fig. 19 is a view illustrating a recording data format of the parallax barrier method.

## DESCRIPTION OF REFERENCE NUMERALS

| | |
|---|---|
| 100, 200, 300 | image processing device |
| 101 | control means |
| 102 | 3D information creation means |
| 103 | image integration means |
| 104 | encoding means |
| 105 | multiplexing means |
| 201 | position determination means |
| 202 | attention image area determination means |
| 203 | reproduction position estimation means |
| 301 | image display means |
| 500 | image reproducing device |
| 501 | demultiplexing means |
| 502 | 3D information analyzing means |
| 503 | decoding means |
| 504 | image converting means |
| 600 | image display panel |
| 601 | parallax barrier |
| 602 | right eye |
| 603 | left eye |

## BEST MODE FOR CARRYING OUT THE INVENTION

(Embodiment 1)

An embodiment of the present invention is described with reference to the drawings. Hereinafter, a term "3D" is used to mean three-dimensional or stereoscopic, and a term "2D" is used to mean two-dimensional, and it is described by referring a stereoscopic image as a "3D image" and a general two-dimensional image as a "2D image".

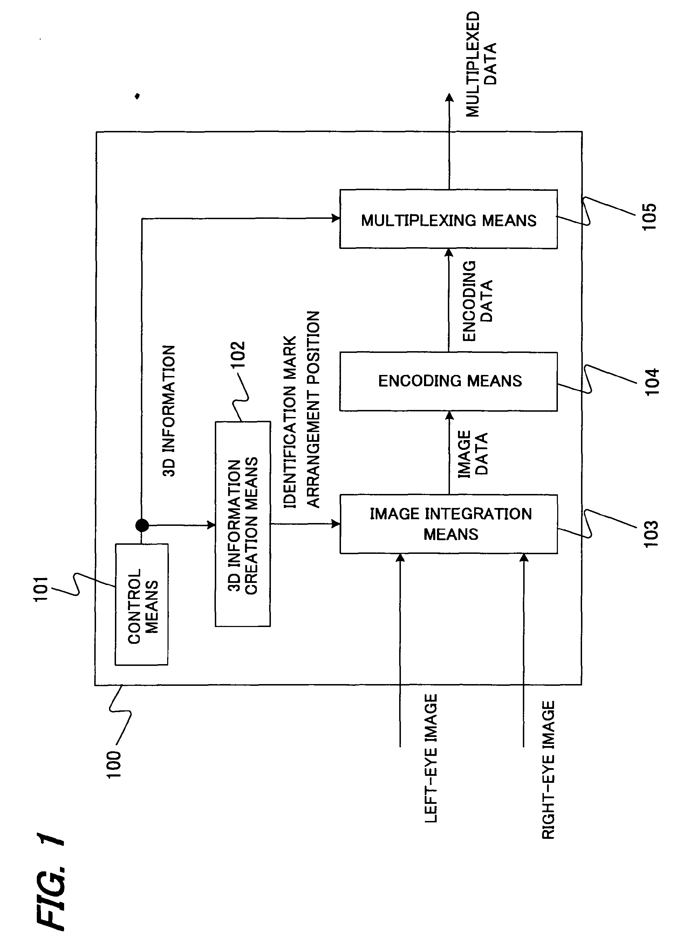

Fig. 1 is a block diagram showing a configuration of an image processing device of an embodiment 1 of the present invention.

An image processing device 100 is provided with control means 101 for outputting 3D information such as an image identifier indicating a stereoscopic image and a method of creating the stereoscopic image, and information on arrangement position of an identification mark visually indicating the image identifier; 3D information creation means 102 for creating the identification mark; image integration means 103 for integrating a left-eye image, a right-eye image and the identification mark created by the 3D information creation means 102; encoding means 104 for encoding an integrated image; multiplexing means 105 for multiplexing image data and the 3D information to output; and means for accessing recording media and a communication line.

An image signal composed of the left-eye image and the right-eye image is input to the image processing device 100. The control means 101 specifies that the image is the stereoscopic image and how the image is created and specifies a position to arrange the identification mark to be created later. The control means 101 sends the 3D information including image identifier including the information indicating the stereoscopic image and the image indicating the method of creating the stereoscopic image, further, the information on the arrangement position of the image identifier, to the 3D information creation means 102 and the multiplexing means 105.

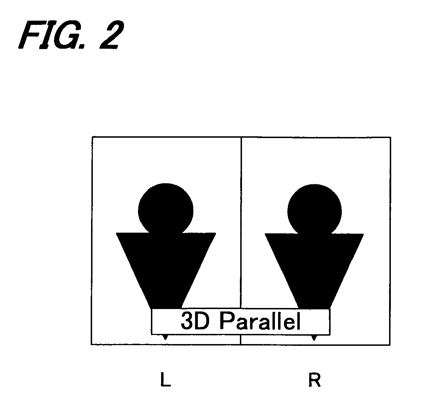

The 3D information creation means 102 creates the identification mark visually indicating the stereoscopic image and the method of creating, based on the image identifier, and sends the same to the image integration means 103 together with the arrangement position information of the identification mark. The image integration means 103 integrates the identification mark based on the left-eye image, which is the image seen from a viewpoint position of a left eye, the right-eye image, which is the image seen from a viewpoint of a right eye, and the arrangement positional information, to create the image data of a specified format. Herein, a specific example of the image data, which is created by the image integration means, is shown in Fig. 2. In Fig. 2, an image L, which is arranged on the observer' s left, is the left-eye image, and an image R, which is arranged on the observer's right, is the right-eye image.

A portion indicating "3D Parallel" in the stereoscopic image is the identification mark. The portion "3D" indicates that the image is the stereoscopic image, and the portion "Parallel" indicates that the image is created by a parallel method. A character string indicating the stereoscopic image may be "Stereo", "Stereo Photograph" or "Stereo Image" other than "3D". Also as a character string indicating a type of the method of creating, it may be displayed "Crossing" or the like in a case of crossing method, or the parallel method and the crossing method may be displayed more simply as "P" and "C", respectively. Also, the parallel method and the crossing method may be displayed by using marks "||" and "×", respectively, other than the characters.

By integrating such an identification mark, it becomes possible to immediately judge that the image is the image for 3D when displayed on a 2D display. In addition, by making the method of creating clear, when viewing the above-described stereoscopic image displayed on the 2D display stereoscopically by naked eyes, there is an advantage that it is easy to view stereoscopically. When viewing stereoscopically, although it is required to see the image arranged on the left side by the left eye and the image arranged on the right side by the right eye in a case of the parallel method, and it is required to see the image arranged on the right side by the left eye and the image arranged on the left side by the right eye in a case of the crossing method. However, by making the method of creating the image clear, it becomes possible to immediately judge the way to see.

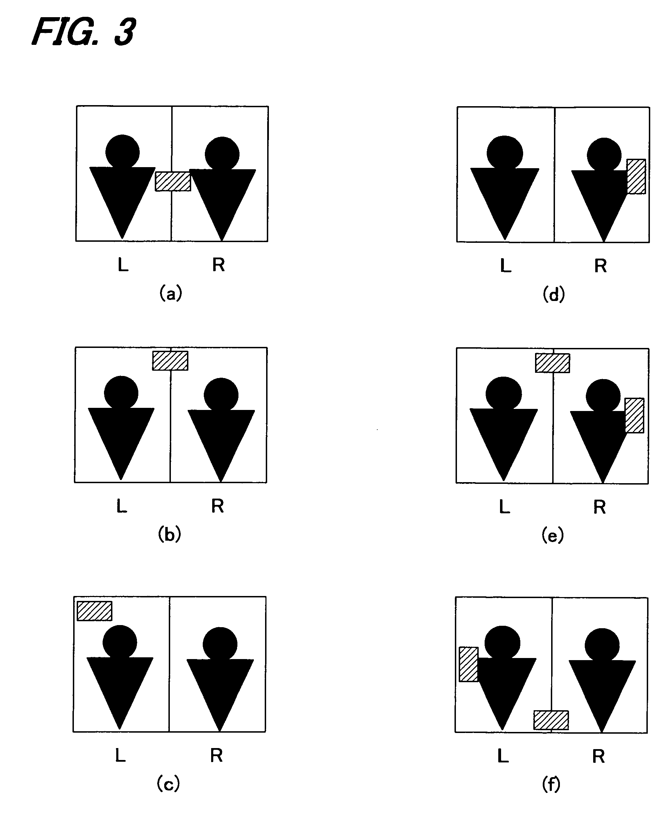

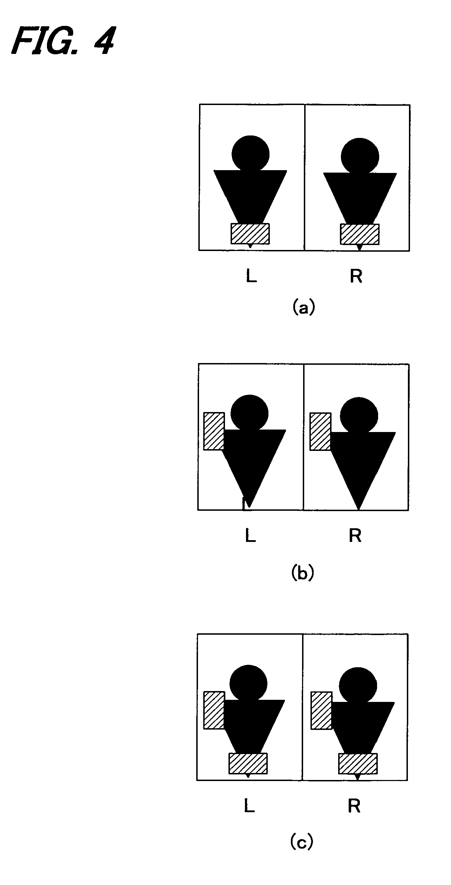

There are a various patterns of an arrangement method of the identification mark in stereoscopic image. The control means 101 determines the position to arrange the identification mark according to a predetermined method. Figs. 3 and 4 show examples thereof. Fig. 3(a) shows an example in which the identification mark is arranged near the central portion of the image, and Fig. 3(b) shows an example in which the mark is arranged in a central upper portion of the image as an example to arrange near the central portion in the vicinity of any of upper and lower sides of the stereoscopic image. Although not shown, it is possible to arrange on a central lower portion of the image. Also, Fig. 3(c) is a view in which the mark is arranged on a left upper portion of the image as an example to arrange on any corner of the stereoscopic image, and Fig. 3(d) is a view in which the mark is arranged on a right end portion of the image as an example to arrange near the central portion in the vicinity of any of left and right sides. Although not shown, the mark may be arranged on a left lower portion, right upper portion, right lower portion and left end portion of the image.

Also, Fig. 3(e) shows an example in which the marks are arranged near the central portion in the vicinity of the upper end and the right end of the stereoscopic image, and Fig. 3(f) is an example in which the marks are arranged near the central portion of the lower end and the left end. Although not shown, it is possible to arrange on the upper end and the left end, and the lower end and the right end. Although the example in which the marks are arranged on two portions is herein described, by arranging the marks on two or more portions of the stereoscopic image, in this manner even when trimming is applied in image editing or the like and the upper and lower ends or the left and right ends are cut away, eithermarkremains, so that itispossible to judge that the image is the stereoscopic image.

Fig. 4 shows an example in which the identification marks are arranged on the right and left images. In the arrangement shown in Fig. 3, since the identification mark does not satisfy a condition to be reproduced as the stereoscopic image, this is not observed as a normal image and brings discomfort, when displayed on a 3D-compliant display. Therefore, byarrangingthe identificationmarks on substantially same positions of the right and left images, on positions having parallax according to a creation condition, as shown in Fig. 4, the marks are fused to each other when viewed stereoscopically, thereby, it becomes possible to correctly view the same stereoscopically. Fig. 4(a) is a view in which the identification marks are arranged on lower ends of the right and left images, as an example in which the identification marks are arranged so as to be fused to each other in the vicinity of any of the upper and lower ends of the stereoscopic image. Although not shown, the mark may be arranged on the upper end.

Also, Fig. 4(b) shows an example in which the marks are arranged on the left ends or the right ends of each viewpoint image on the stereoscopic image so as to be fused to each other, and this is an example in which the marks are arranged on the left ends of each viewpoint image. Although not shown, the marks may be arranged on the right ends of each viewpoint image. Fig. 4(c) is an example in which marks are arranged on two positions on each viewpoint image of the stereoscopic image so as to be fused to each other, and the marks are arranged on the left end and the lower end. Although not shown, the marks may be arranged on the left and upper ends, the right and lower ends, and the right and upper ends.

Although there are some methods of arranging as described above, when the images are printed out using a non-3D-compliant device, there is a case in which the images are trimmed and the marks are cut away depending on a paper size. Therefore, the marks are arranged within a range to be described later in order to prevent the marks from being cut away.

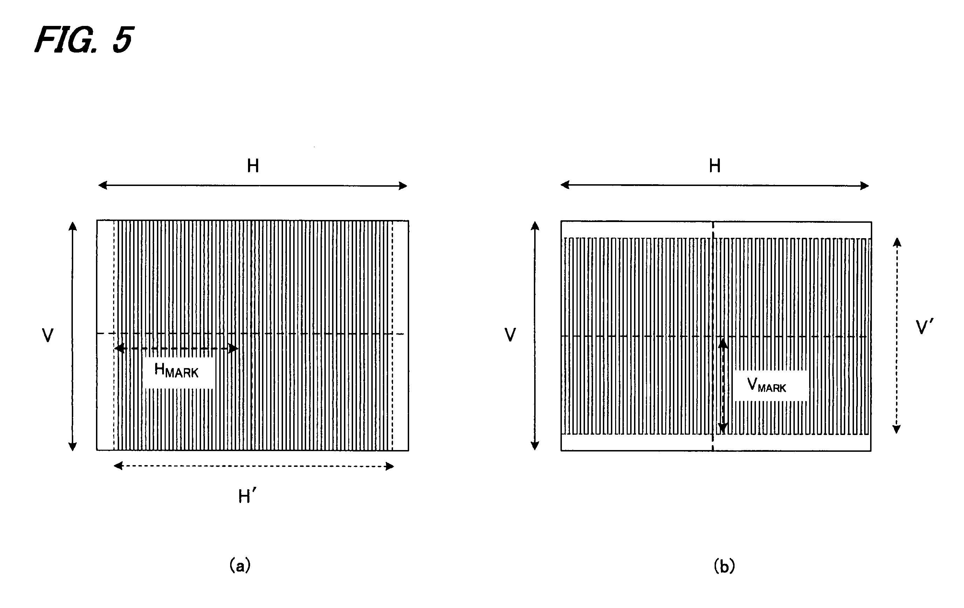

An aspect ratio of the image and printing paper is generally 4:3 or 3:2. Therefore, it could be that a 3:2 image is output on a 4:3 printing paper and the left and right ends are cut away or that a 4:3 image is output on a 3:2 printing paper and the upper and lower ends are cut away. A condition in which the marks are not cut away at that time is shown based on Fig. 5. In Fig. 5, an outer portion drawn by a solid line indicates a range of the stereoscopic image and a portion enclosed by a dashed line is a size of the printing paper on which the image is to be output. Fig. 5(a) shows a case in which the 3:2 image is output on the 4 : 3 printing paper, wherein a longitudinal length and a vertical length of the stereoscopic image are set to V and H, respectively, and a vertical length of the printing paper is set to H'. Since H': V = 4:3 from the size of the printing paper, H' = (4/3)×V is satisfied. Therefore, if a range in which the identification mark is arranged is set to $H_{MARK}$, by arranging within the range represented by

$$H_{MARK} \leq (4/3) \times V/2$$

from the central portion of the image, it is possible to prevent the marks from being trimmed and cut away when printing.

Also, Fig. 5(b) is a case in which the 4:3 image is output on the 3:2 printing paper, and as in the previous case, when the longitudinal length and the vertical length of the stereoscopic image are set to V and H, respectively, and the longitudinal length of the printing paper is set to V', H:V'= 3:2 is satisfied, therefore, V' = (2/3)×H is satisfied. Therefore, if a range in the vertical direction in which the identification mark is to be arranged is set to $V_{MARK}$, by arranging within the range represented by

$$V_{MARK} \leq (2/3) \times H/2$$

from the central portion of the image, it is possible to prevent the marks from being trimmed and cut away when printing. The marks will be arranged in the above-described range and on the positions shown in Figs. 3 and 4.

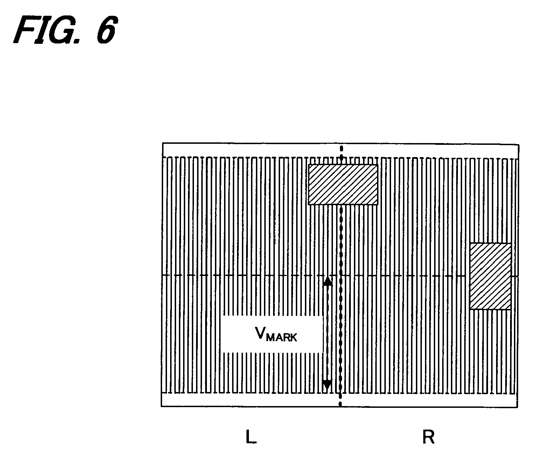

An example of the stereoscopic image on which the identification marks are arranged according to such limitation is shown in Fig. 6. This is the case in which the 4:3 image size. As shown in Fig. 3(e), in a case in which the identification marks are arranged on the upper end and the right end, the mark, which is arranged on the upper end, is arranged in a range represented in gray color indicating a range shorter than $V_{MARK}$ from the central portion of the image as shown in Fig. 6 in order to prevent the same from being trimmed and cut away even when printing on the 3:2 printing paper.

The encoding means 104 encodes the image data created in the image integration means 103 to create encoding data. As an encoding method, there is an international standard method such as JPEG, JPEG2000 for a still image. Although herein, the still image is described, a moving image also may be used, and in a case of the moving image, an image signal is composed of a consecutive frames, and is input to the image processing device frame by frame. For the moving image, there is the international standard method such as MPEG (Moving Picture Experts Group) -1, MPEG-2 and MPEG-4. When using only an intra-frame encoding as encoding of the moving image, a method such as Motion JPEG (Joint Photographic Experts Group) may be used. An image encoding method is not limited to the above and non-standard method may be used, and it is also possible that the image is not compressed.

The multiplexing means 105 converts the 3D information from the control means 101 and the encode data from the encoding means 104 to a predetermined format and outputs the same to outside. Although not shown in Fig. 1, when multiplexing voices and texts, the data thereof also are multiplexed in the multiplexing means 105.

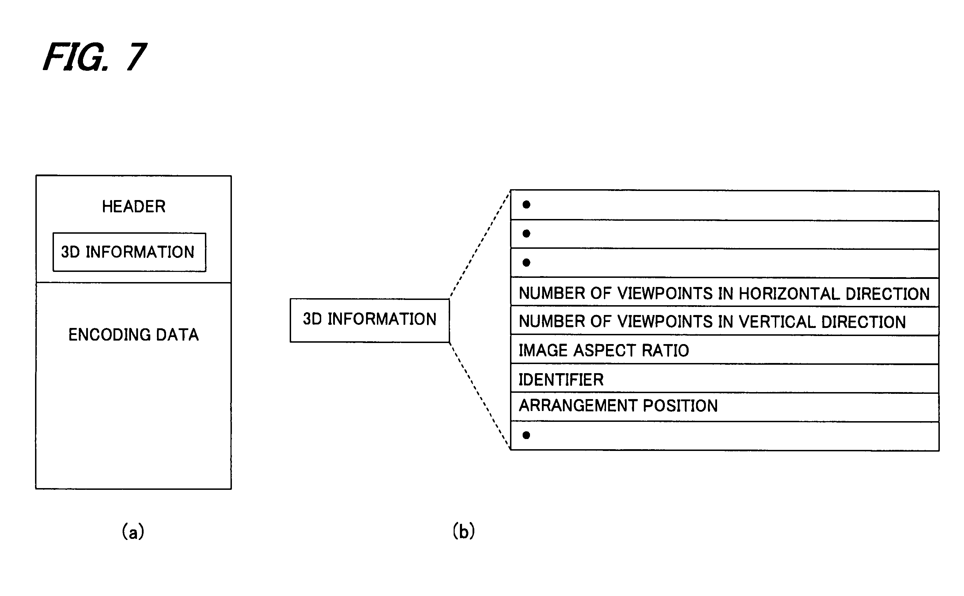

As an output destination of the multiplexing means 105, a recording device such as an IC memory, a magnetic optical disk, a magnetic tape and a hard disk, and a communication device such as a LAN modem are connected. Herein, a recording format in a case in which the IC memory is connected to the multiplexing means 105 will be described. In general, when using the IC memory as the recording media, a file system such as FAT (File Allocation Table) is built on the IC memory, and the data is recorded as the file. A file format herein used may be an existing format or a unique format. When using the existing format, the 3D information should be recorded as a part of a header of the existing file by using a mechanism to extend the header prepared for the existing format in general. The example at that time is shown in Fig. 7. As shown in Fig. 7(a), the 3D information is recorded in the header portion. As shown in Fig. 7(b), the 3D information includes information such as the number of viewpoints in addition to the identifier and the arrangement method.

When using the existing format, an extension corresponding to the format is used. In a case of a JPEG file, an extension ".jpg" is used. Thereby, it becomes possible that the conventional reproducing device, which does not have a 3D image displaying function, recognizes the same as the file of the existing format and displays as the two-dimensional image, and since the identification mark is displayed at that time, it is possible to determine the same to be the stereoscopic image.

(Embodiment 2)

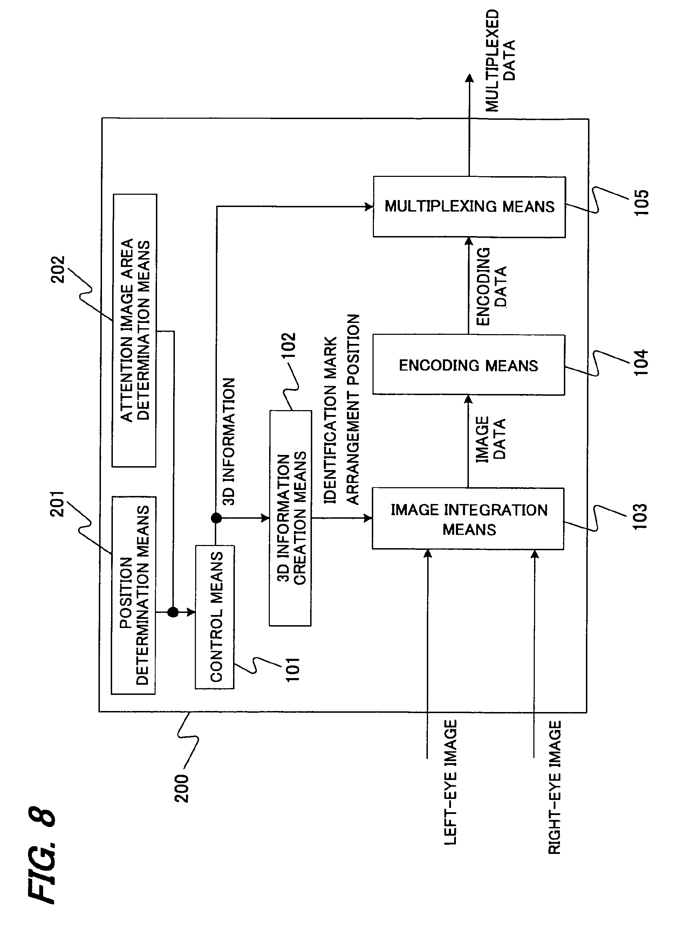

An embodiment of the present invention will be described with reference to the drawings. Fig. 8 is a block diagram showing a configuration of an image processing device of an embodiment 2 of the present invention.

An image processing device 200 is provided with the control means 101 for outputting the 3D information including the image identifier indicating the stereoscopic image and the method of creating the stereoscopic image and the information on arrangement position of an identification mark visually indicating the image identifier; position determination means 201 for determining the arrangement position of the identification mark; attention image area determination means 202 for determining an area, which is wanted to be viewed stereoscopically; 3D information creation means 102 for creating the identification mark; the image integration means 103 for integrating the left-eye image, the right-eye image and the identification mark created by the 3D information creation means 102; the encoding means 104 for encoding the integrated image; multiplexing means 105 for multiplexing the image data and the 3D information to output; and means for accessing the recording media and the communication line.

The image signal composed of the left-eye image and the right-eye image is input to the image processing device. A photographer of the stereoscopic image or a creator of the image determines a position on which the identification mark indicating the stereoscopic image and how this is created is displayed by the position determination means 201 in advance, and sends the same to the control means 101. Also, when setting the 3D attention image area, the area is specified by the attention image area determination means 202 and sends the same to the control means 101. A detail of the identification mark and the arrangement position and the 3D attention image area will be described later. The control means 101 sends the 3D information including the image identifier including the information that the image is the stereoscopic image and the information on the creating method and the information on the arrangement position to the 3D information creation means 102 and the multiplexing means 105.

The 3D information creation means 102 creates the identification mark visually indicating the stereoscopic image and the creating method thereof based on the image identifier, and sends the same together with the information on the arrangement position of the identification mark to the image integration means 103. The image integration means 103 integrates the left-eye image, which is the image seen from the viewpoint position of the left eye, the right-eye image, which is the image seen from the viewpoint position of the right eye, and the identification mark, based on the arrangement positional information, and creates the image data of a specified format.

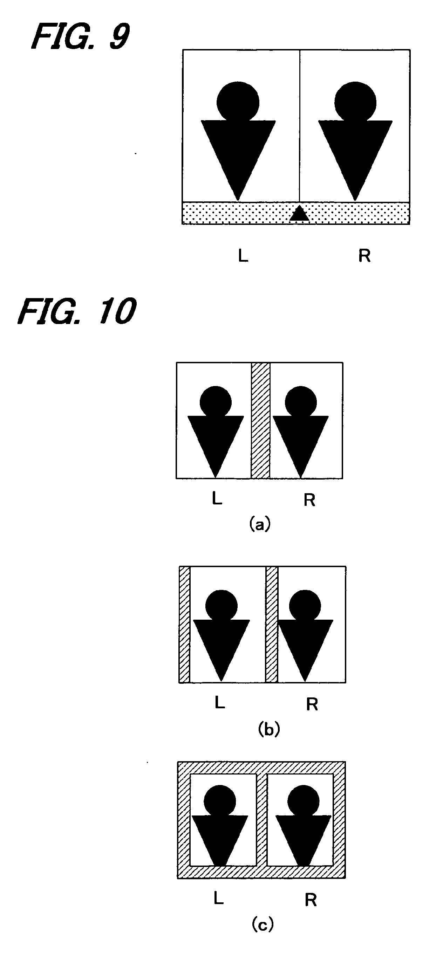

Herein, a specific example of the stereoscopic image, which is created by the image integration means 103, is shown in Fig. 9. In Fig. 9, the image L, which is arranged on the observer's left, is the left-eye image, and the image R, which is arranged on the observer's right, is the right-eye image. A strip-shaped portion drawn in gray on the lower portion of the stereoscopic image is the identification mark. The information indicated by the identification mark is the information indicating the stereoscopic image and the method of creating the same, as in the case of Fig. 2. Herein, the identification mark is represented by a color code, and a color of the strip-shaped portion defines that the image is the stereoscopic image and the color of a triangle mark defines the creating method thereof. As an example, it becomes possible to determine, by setting the color of the strip-shaped portion to 18% gray, and by setting that when the color of the triangle, which indicates the creating method, is blue, this means the parallel method, and when the color is yellow, this means the crossing method. By representing the mark by the color code, it is not possible to determine if one does not known the meaning of the color in advance, so that representing in a character string is advantageously clear and easy to determine. However, on the other hand, the color code mark can advantageously make a footprint of the mark small, since it is possible to determine if only the color is judged.

The arrangement position of the identification mark in the stereoscopic image may be set on an optional position by the photographer or the creator by means of the position determination means 201. Fig. 10 shows an example thereof. Fig. 10(a) shows an example in which the mark is arranged on the central portion of the stereoscopic image. Also, Fig. 10(b) shows an example in which the marks are arranged on left end or right end of each viewpoint image on the stereoscopic image such that the left and right marks are fused to each other, and a case in which the marks are arranged on the left ends is shown. Although not shown, the marks may be arranged on the right ends. Fig. 10(c) is a view of a case in which the marks enclose an outer peripheral portions of each of the right and left viewpoint images on the stereoscopic image such that the right and left marks may be fused to each other. The position may be freely selected from these examples depending on a composition of the image.

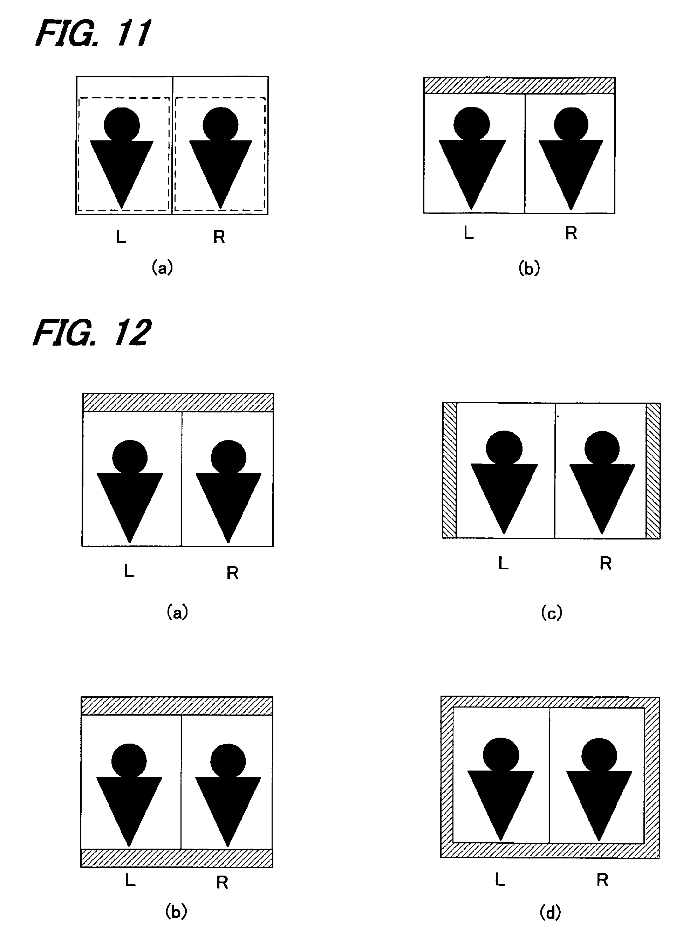

In addition, other than the example shown in Fig. 10, there is a method to arrange the identification mark out of the 3D attention image area. This example is shown in Figs. 11 and 12. The 3D attention image area is the image area, which the creator wants to make stereoscopically viewed. The creator of the image sets the 3D attention image area by the attention image area determination means 202. If the views of the right and left viewpoints are created by using image editing software of the like, the 3D attention image area is determined in advance based on the same, and is set by the attention image area determination means 202. For example, in Fig. 11(a), if the creator wants a portion enclosed by a dashed line to be stereoscopically viewed on the image obtained by integrating the right and left images, the dashed line portion is set as the 3D attention image area and the identification mark is arranged outside the area as shown in Fig. 11(b). In addition, in Fig. 11, the 3D attention image area is set within the right and left stereoscopic images and the image size after arranging the identification mark does not change. For example, if each of the right and left images, which compose the stereoscopic image, has a size 512x768, and a size after integration is 1024x768, what is called an XGA size, the identification mark is arranged in the image size, and the final size of the stereoscopic image also is 1024x768.

On the other hand, when it is wanted to display an entire image, which will be obtained by integrating the right and left images, an entire area obtained by integrating the right and left images is set as the 3D attention image area, and the identification mark is arranged outside the same by enlarging the image size. For example, when each of the right and left images has a size of 320x480 and if it is wanted that an entire image is stereoscopicallyviewed, the area having the size of 640x480, which is obtained by integrating the right and left images, becomes the 3D attention image area. In this case, the identification mark will be arranged outside thereof. As shown in Fig. 12(a), when arranging a horizontally long strip-shaped mark is arranged on the upper end, if the size of the strip-shaped marks is 640x60, by arranging the strip-shaped mark on the upper side of the 3D attention image area, which is obtained by integrating the right and left images, the stereoscopic image finally has a size of 640x540.

In this manner, by arranging the identification mark outside the 3D attention image area, when the image is displayed on the general 2D display, it is possible to prevent confusion by indicating the stereoscopic image by the identification mark, and when this is displayed on the 3D display, since the identification mark is outside the 3D attention area, by not displaying this portion, it is possible to display only the portion, which is wanted to be viewed stereoscopically, without displaying the identification mark. Other than Fig. 12(a), the horizontally long strip-shaped mark may be arranged on the upper and lower ends of the stereoscopic image, outside the 3D attention image area as shown in Fig. 12(b). Also, Fig. 12(c) is a view in which a longitudinally long strip-shaped mark is arranged on right and left ends of the stereoscopic image, outside the 3D attention image area, and Fig. 12 (d) is a view in which the strip-shaped mark enclosing the outer peripheral portion on the stereoscopic image, outside the 3D attention image area.

The encoding means 104 encodes the image data created in the image integration means 103 and creates the encoding data. As the encoding method, there is the international standard method such as JPEG, as in the embodiment 1. This is not limited to the above and the non-standard method may be used, and it is also possible that the image is not compressed.

The multiplexing means 105 converts the 3D information from the control means 101 and the encoding data from the encoding means 104 to a predetermined format and outputs the same to outside.

As the output destination of the multiplexing means 105, the recording device such as the IC memory, the magnetic optical disk, the magnetic tape and the hard disk, and the communication device such as the LAN modem are connected. For example, when the hard disk is connected, in a case of the JPEG format, the data is recorded with the extension ".jpg". The 3D information is recorded as a part of the existing file header by using the mechanism to extend the header prepared for the existing format, in general, and the 3D information includes the information such as the number of viewpoints and the area of the 3D attention image in addition to the identification information and the arrangement method.

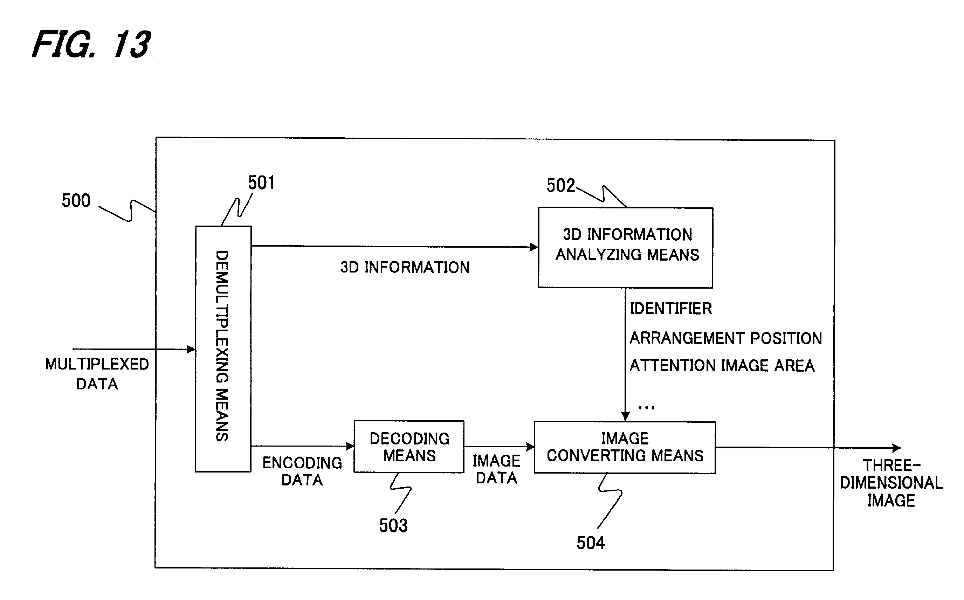

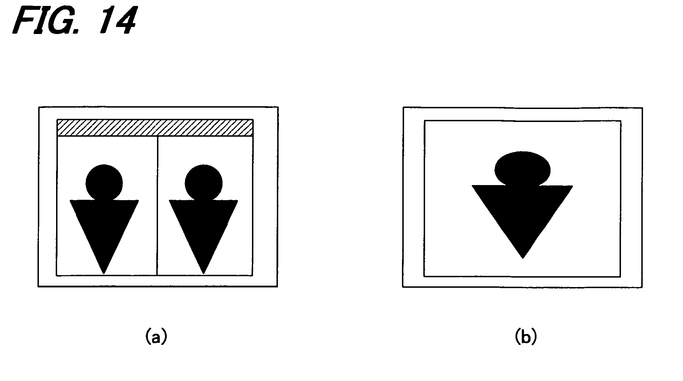

An image reproducing device for reproducing multiplexing data recorded in this manner is described with reference to Fig. 13. In a case of reproducing by the image reproducing device 500, the multiplexing data is divided into the 3D information and the encoding data by means of demultiplexing means 501, the 3D information is analyzed by means of 3D information analyzing means 502, and the information on the arrangement position of the identification mark and the 3D attention image area is sent to image converting means 504. The encoding data is decoded by means of decoding means 503, and the image data is sent to the image convertingmeans 504. Then, if the reproducing device is the 3D display, only the 3D attention image area may be stereoscopically displayed. Fig. 14 shows an example in which the three-dimensional image is displayed on the 2D display and the 3D display, wherein Fig. 14(a) shows a case of displaying on the 2D display and Fig. 14(b) shows an image of the stereoscopic image displayed when displayed on the 3D display. As shown in Fig. 14(b), by detecting the 3D attention image area on the reproducing device side to hide outside of the attention image area, the identification information is not displayed when stereoscopically viewing, and it becomes possible to observe only the portion, which is wanted to be stereoscopically viewed.

Meanwhile, in Fig. 9, the color and shape of the identification mark are not limited to the ones herein described, and the marks shown in Fig. 2 may be used instead of the strip-shaped one to define that the image is the stereoscopic image, and the color may be blue instead of gray. In addition, although an example to mark out the strip-shaped portion and the color code is described, a back image may be transparent. The figure indicating the creating method is not limited to the triangle and may be a circle and a rectangular, and it is possible to define the parallel method and the crossing method by other colors such as red and green, respectively. A combination in which the color to indicate that the image is the stereoscopic image and the color to indicate the creating method are easy to determine may be used. In addition, although in an example shown in Fig. 12, the 3D attention image area is set such that entire right and left images is set as the 3D attention image area and the identification mark is arranged outside thereof in order to display an entire image obtained by integrating the right and left images, on the other hand, it is possible to set the entire right and left images as the attention image region and arrange the identification mark inside thereof, in order to prevent the size of the image data to be generated from being large.

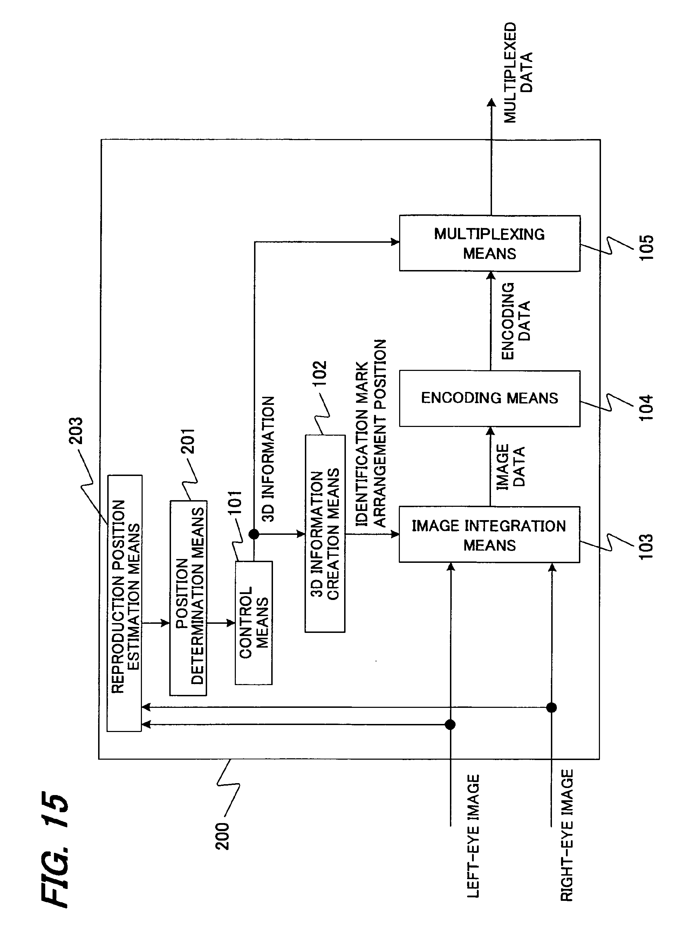

In addition, regarding the arrangement of the identification mark, there is the method to automatically determine the arrangement position by means of the position determination means 201 instead of the method to select the position in advance from the example shown in Fig. 10 or described in the embodiment 1. Fig. 15 shows a block diagram of the image processing device configured in this manner. The position determination means 201 keeps the arrangement examples shown in Fig. 10 and described in the embodiment 1 as candidates of the arrangement position of the identification mark with an order of priority, and selects the optimal arrangement position depending on the content of the stereoscopic image.

In doing so, in order to make the identification mark itself be correctly stereoscopically viewed when stereoscopically viewing, the arrangement in which the right and left identification marks are fused to each other shown in Figs. 4, 10(b) and 10(c) is selected. At that time, by arranging the identification marks to relatively same positions relative to frames of screens of each of the right and left images, when stereoscopically viewing, since the identification marks do not have parallax, the position thereof in a depth direction to be reproduced (displayed) is on the same position as on the display screen.

Herein, if the parallax exists in the image around the identification mark and the stereoscopic image is seen so as to be standing out in front of the position on the display screen, since only the identification mark is on the position on the display screen, it is seen so as to sink in the image around the same and is unnatural. Therefore, values for each pixel are compared with regard to the right and left images, corresponding points of the right and left images are detected, and the reproduction position in depth, which is the position on which the image is to be reproduced when stereoscopically viewed, is estimated, by reproduction position estimation means 203 shown in Fig. 15.

By this estimation, according to the priority order kept in advance, the reproduction position in depth of the stereoscopic image on candidate position on which the identification mark is arranged is obtained, and if the reproduction position of the stereoscopic image is not in front of the display screen, the position is set as the arrangement position of the identification mark. It is also possible to obtain the reproduction positions in depth of each arrangement position candidate and arrange the identification mark on an area on which the reproduction position in depth of the stereoscopic image is the nearest to the position on the screen, without keeping the priority order.

(Embodiment 3)

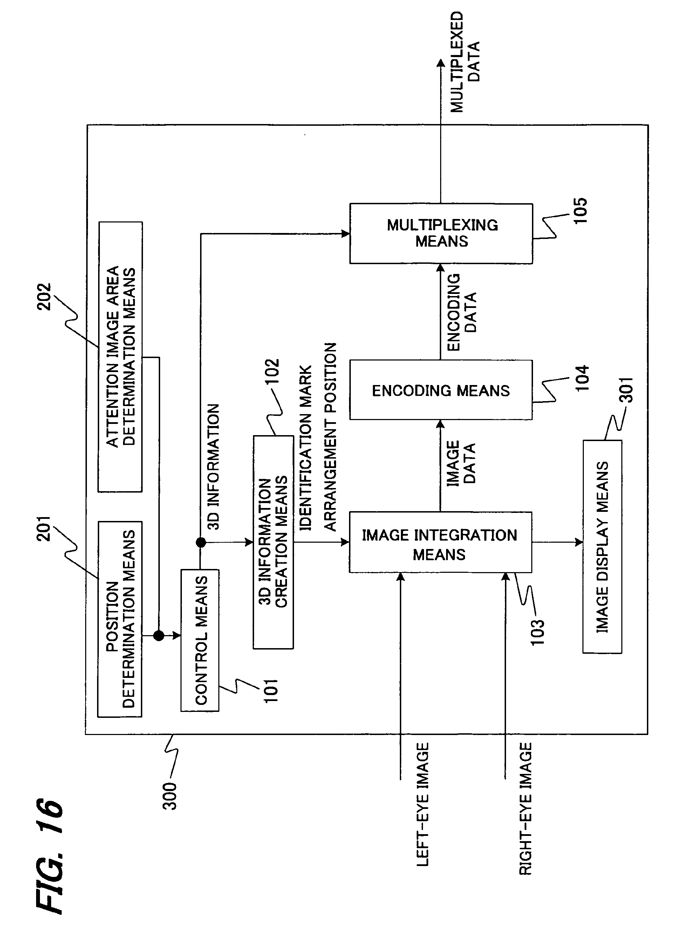

An embodiment of the present invention is described with reference to the drawings. Fig. 16 is a block diagram showing a configuration of the image processing device of an embodiment 3 of the present invention.

An image processing device 300 is provided with the control means 101 for outputting the 3D information such as the image identifier indicating the stereoscopic image and the creating method of the stereoscopic image and information on the arrangement position of the identification mark visually indicating the image identifier; the position determination means 201 for determining the arrangement position of the identification mark; the attention image area determination means 202 for determining the image area, which is wanted to be stereoscopically viewed; the 3D information creation means 102 for creating the identification mark; the image integration means 103 for integrating the images of the plurality of view points and the identification mark created by the 3D information creation means 102; image display means 301 for previewing the integrated image such that the creator of the image confirms the stereoscopic image; the encoding means 104 for encoding the integrated image; and the multiplexing means 105 provided with means for accessing the recording media and the communication line for multiplexing the image data and the image identifier and outputting the same.

The image signal composed of the left-eye image and the right-eye image is input to the image processing device. The photographer or the creator of the stereoscopic image determines a position candidate on which the identification mark is displayed for indicating the stereoscopic image and how this is created by inputting information by means of the position input means by means of the position determination means 201 in advance and sends the same to the control means 101. Although the position input means is not shown, this is connected to the image processing device 300 and configured of known input means such as a mouse and a keyboard, and the input information is sent to the position determination means 201. The attention image area determination means 202 specifies the attention image area and sends the same to the control means 101. The control means 101 sends the 3D information including the image identifier including the information that the image is the stereoscopic image and the information on the creating method of the stereoscopic image and the information on the arrangement position to the 3D information creation means 102 and the multiplexing means 105.

The 3D information creation means 102 creates the identification mark visually indicating the stereoscopic image and the creating method of the stereoscopic image based on the image identifier and sends the same to the image integration means 103 together with the arrangement position information of the identification mark. The image integration means 103 creates the image data in which the images viewed from the plurality of viewpoint positions and the identification mark are integrated based on the arrangement position information. At that time, the image integration means 103 sends the stereoscopic image to image display means 301. The image display means 301 displays sent stereoscopic image, and the creator of the image corrects the arrangement position candidate of the identification mark through the position determination means 201 by using the position input means such as the mouse while confirming the stereoscopic image. When there is correction, this is confirmed again by the image display means 301 through the 3D information creation means 102 and the image integration means 103. If the arrangement position is determined, by sending arrangement position determination information to the position determination means 201 by the position input means, the arrangement position of the identification mark is determined according to the arrangement position determination information and the integrated image data is sent to the encoding means 104.

Thereby, it becomes possible to set an appropriate position so as to match the image while confirming how the identification mark is arranged on the stereoscopic image. In addition, when the image display means 301 is the display, which supports both of the 2D/3D display, it is possible to confirm how is the image when stereoscopically viewed by switching to the 3D display. As the display device, which supports both the 2D/3D display, there is a parallax barrier method in which a barrier is realized by a liquid crystal and controls such that only light corresponding to the left-eye image and the right-eye image reaches the left and right eyes by the barrier in a 3D display mode, and transmits all light in a 2D mode.

Also, herein, it is possible to set the 3D attention image area while confirming the stereoscopic image. By setting the 3D attention image area while seeing the image display means 301, even when creating the stereoscopic image by a camera or the like, it is possible to set the 3D attention image area, and by arranging the identification mark outside the area, it is possible to hide the identification mark when displaying on the 3D display. Arrangement procedure of the identification mark at that time is as follows: the creator specifies a planned position on which the identification mark is to be arranged by using the known position input means such as the unillustrated mouse, which is connected to the image processing device 300, the information is input to the position determination means 201, and the control means 101, which receives the information from the position determination means 201, sends the position information to the 3D information creation means 102 and displays the image in which the identification mark is arranged on the position, which is specified by the creator through the image integration means 103 on the display means 301.

Herein, of course, specification of the planned position by the user is limited to outside the 3D attention image area, and when this is specified within the attention image area, an appropriate action is taken, that is, a nearest position in an arrangeable area is alternatively selected, or it is alerted that is not arrangeable. Then, while variably selecting the planed position, when the user judges to be reasonable, an input operation of determination is performed using an appropriate input means such as the mouse, thereby, the arrangement position determination information is sent to the position determination means 201 and the position determination means 201 determines the arrangement.

A kind and the arrangement of the identification mark in the stereoscopic image has a variety of ways as described in the embodiments 1 and 2, and the photographer and the creator of the image may optionally determine while confirming the stereoscopic image.

The encoding means 104 encodes the image data, which is created in the image integration means 103, and creates the encoding data. As the encoding method, there is the international standard method such as JPEG, as in the embodiment 1. The method is not limited to the above, and the non-standard method may be used, or it is also possible that the image is not compressed.

The multiplexing means 105 converts the 3D information from the control means 101 and the encoding data from the encoding means 104 to the predetermined format and outputs the same to outside.

As the output destination of the multiplexing means 105, the recording device such as the IC memory, the magnetic optical disk, the magnetic tape and the hard disk, and the communication device such as the LAN modem are connected. For example, in a case of the JPEG format, the data is recorded in the hard disk with the extension ".jpg". The 3D information is recorded as a part of the existing file header by using the mechanism of extending the header, which is prepared for the existing format, in general, wherein the 3D information includes the information such as the number of viewpoints and the range of the 3D attention image area in addition to the identifier and the arrangement method.

Meanwhile, although it is described that the image display means 301 is included in the image processing device 300 in Fig. 16, of course this may be connected to outside without being included in the image processing device 300.

Also, although it is described that each time confirming the image by the image display means 301, this is through the 3D information creation means 102 and the image integration means 103, it is possible that this is not through the image integration means 103 and the information from the 3D information creation means 102 is sent to the image display means 301 and merely overlap the identification mark in the image display means 301 to display in the image display means 301 without going through the image integration means 103, until the arrangement position is determined by the arrangement position determination information. Also, it is possible to go through the 3D information creation means 102 only when arranging first, and thereafter, only the position information of the identification mark is sent by the control means 101 and only the position of the identification mark is changed by the image display means 301 until the arrangement position is determined by the arrangement position determination. Thereafter, when the position determination means 201 determines the arrangement position according to the arrangement position determination information, the integration image is created by the control means 101, the 3D information creation means 102 and the image integration means 103.

Also, although it is described that when arranging the identification mark, the arrangement position is limited to the above-described outside the 3D attention image area, and the alert and the automatic position change is performed when arranging within the 3D attention image area, in a case in which the 3D attention image area is not set and when this is to be arranged on the position that the identification mark protrudes from the stereoscopic image and when this is to be arranged so as not satisfy the condition of the arrangement range of the identification mark, $H_{MARK}$ and $V_{MARK}$, are not satisfied, similar alert and position change may be performed.

In addition, the image display means 301 shown in this embodiment is applicable to the image processing device having the configuration shown in Fig. 15 of the embodiment 2, and in a case of the configuration to automatically determine the identification mark arrangement position by using the reproduction position estimation means, it is possible to be provided with the image display means 301 and determine the position of the identification mark by confirming by using the image display means.

In addition, the present invention is not limited to the above-described each embodiment, and a variety of change is possible within a scope recited in Claims, and embodiments, which will be obtained by appropriately combining technical means disclosed in the different embodiments, is included in the technical scope of the present invention.

**Claims**

1. An image processing device for creating stereoscopic image data composed of a plurality of images corresponding to each of a plurality of viewpoints, comprising:

   information creation means including information indicating a stereoscopic image and information indicating a method of creating the stereoscopic image, for creating a stereoscopic image identifier visible as the image when displaying the stereoscopic image, wherein the stereoscopic image data includes the stereoscopic image identifier.

2. The image processing device according to Claim 1, wherein the stereoscopic image identifiers are arranged on two or more portions within the stereoscopic image data.

3. The image processing device according to Claim 1 or 2, wherein the stereoscopic image identifiers are arranged so as to be fused to each other when displaying the stereoscopic image data on a display device capable of stereoscopically viewing.

4. The image processing device according to any one of Claims 1 through 3, further comprising arrangement position determination means for determining an arrangement position of the stereoscopic image identifier at an optional position within the stereoscopic image data.

5. The image processing device according to Claim 4, further comprising attention image area setting means for setting an attention image area within the stereoscopic image data, wherein the arrangement position determination means arranges the stereoscopic image identifier outside the attention image area in the stereoscopic image data.

6. The image processing device according to Claim 4, further comprising image display means for displaying the image, for displaying the image in a state in which the stereoscopic image identifier is arranged on a planned position by the arrangement position determination means on the image display means, wherein the arrangement position determination means determines the arrangement position of the stereoscopic image identifier according to arrangement position determination information indicating the arrangement position of the stereoscopic image identifier.

7. The image processing device according to Claim 6, wherein the arrangement position determination means is configured so as to be capable of varying the planned position on which the stereoscopic image identifier is to be arranged, when determining the arrangement position according to the arrangement position determination information.

8. The image processing device according to Claim 4, further comprising reproduction position estimation means for estimating a reproduction position in depth of an optional area of the stereoscopic image data, wherein the arrangement position determination means selects an area based on an estimation result of the reproduction position estimation means to determine the arrangement position of the stereoscopic image identifier.

9. The image processing device according to Claim 8, wherein the arrangement position determination means determines the arrangement position of the stereoscopic image identifier on an area estimated that the stereoscopic image is reproduced behind a screen by means of the reproduction position estimation means.

**10.** The image processing device according any one of Claims 1 through 9, wherein the stereoscopic image identifier is arranged within a range not larger than $(4/3) \times V/2$ in a horizontal direction and not larger than $(2/3) \times H/2$ in a vertical direction from a central portion of the stereoscopic image data, wherein a size of the stereoscopic image data in the horizontal direction is H and a size in the vertical direction is V.

FIG. 1

# FIG. 2

L          R

# FIG. 3

(a)

(b)

(c)

(d)

(e)

(f)

# FIG. 4

L          R

(a)

L          R

(b)

L          R

(c)

## FIG. 5

(a)

(b)

EP 1 912 447 A1

# FIG. 6

$V_{MARK}$

L                    R

# FIG. 7

| HEADER |
|---|
| 3D INFORMATION |
| ENCODING DATA |

(a)

3D INFORMATION

| |
|---|
| ● |
| ● |
| ● |
| NUMBER OF VIEWPOINTS IN HORIZONTAL DIRECTION |
| NUMBER OF VIEWPOINTS IN VERTICAL DIRECTION |
| IMAGE ASPECT RATIO |
| IDENTIFIER |
| ARRANGEMENT POSITION |
| ● |

(b)

## FIG. 8

*FIG. 9*

L          R

*FIG. 10*

L          R

(a)

L          R

(b)

L          R

(c)

# FIG. 11

(a)

L        R

(b)

L        R

# FIG. 12

(a)

L        R

(c)

L        R

(b)

L        R

(d)

L        R

# FIG. 13

500

501 DEMULTIPLEXING MEANS

MULTIPLEXED DATA →

3D INFORMATION → 502 3D INFORMATION ANALYZING MEANS

IDENTIFIER

ARRANGEMENT POSITION

ATTENTION IMAGE AREA

...

ENCODING DATA → DECODING MEANS (503) → IMAGE DATA → IMAGE CONVERTING MEANS (504) → THREE-DIMENSIONAL IMAGE

EP 1 912 447 A1

## FIG. 14

(a)

(b)

**FIG. 15**

LEFT-EYE IMAGE

RIGHT-EYE IMAGE

203 — REPRODUCTION POSITION ESTIMATION MEANS

201 — POSITION DETERMINATION MEANS

101 — CONTROL MEANS

3D INFORMATION

102 — 3D INFORMATION CREATION MEANS

IDENTIFICATION MARK ARRANGEMENT POSITION

103 — IMAGE INTEGRATION MEANS

IMAGE DATA

104 — ENCODING MEANS

ENCODING DATA

105 — MULTIPLEXING MEANS

MULTIPLEXED DATA

200

EP 1 912 447 A1

# FIG. 16

## FIG. 17

LEFT : LEFT-EYE IMAGE
RIGHT : RIGHT-EYE IMAGE

# FIG. 18

(a)

(b)

EP 1 912 447 A1

# FIG. 19

(a)

(b)

(c)

## INTERNATIONAL SEARCH REPORT

| | International application No. |
|---|---|
| | PCT/JP2006/314668 |

**A. CLASSIFICATION OF SUBJECT MATTER**
*H04N13/02*(2006.01)i

According to International Patent Classification (IPC) or to both national classification and IPC

**B. FIELDS SEARCHED**

Minimum documentation searched (classification system followed by classification symbols)
H04N13/02

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 09-160143 A (Nikon Corp.),<br>20 June, 1997 (20.06.97),<br>Par. Nos. [0018] to [0020], [0059]<br>(Family: none) | 1-10 |
| A | JP 2004-274091 A (Sharp Corp.),<br>30 September, 2004 (30.09.04),<br>Drawings; Fig. 4<br>(Family: none) | 1-10 |
| A | JP 11-088912 A (Canon Inc.),<br>30 March, 1999 (30.03.99),<br>Drawings; Fig. 3<br>(Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 August, 2006 (23.08.06) | 05 September, 2006 (05.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/314668

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-111101 A  (Sanyo Electric Co., Ltd.), <br> 11 April, 2003 (11.04.03), <br> Par. No. [0038] <br> & US 2003/0048354 A1 | 1-10 |

Form PCT/ISA/210 (continuation of second sheet) (April 2005)

<table>
<tr><td>**INTERNATIONAL SEARCH REPORT**</td><td>International application No.<br>PCT/JP2006/314668</td></tr>
</table>

Claims 1-10 do not define "the information indicating a method for creating a 3D image" and include a wide range.

However, what is supported by the disclosure in the Description within the meaning of PCT Article 6 is that "the information indicating the method for creating a 3D image" is information indicating that it is created by the parallel method and information indicating that it is created by the intersection method.

Accordingly, the search has been made on the range supported by the Description, i.e., "the information indicating the method for creating a 3D image" is information indicating that it is created by the parallel method and information indicating that it is created by the intersection method.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 324413 A

- JP 160143 A